# FASCICULE DE BREVET EUROPEEN

(11) **EP 2 959 345 B1**
(45) Date de publication et mention de la délivrance du brevet: **11.12.2019**
(21) Numéro de dépôt: 14718641.5
(22) Date de dépôt: 24.02.2014
(51) Int. Cl.: G05B 19/4097, C03B 33/037

(54) **PROCEDE DE DECOUPE D'UN OU PLUSIEURS VITRAGES**
VERFAHREN ZUM SCHNEIDEN EINER ODER MEHRERER GLASSCHEIBEN
METHOD FOR CUTTING ONE OR MORE GLASS SHEETS

(30) Priorité: 22.02.2013 FR 1351541
(43) Date de publication de la demande: 30.12.2015
(73) Titulaire: Saint-Gobain Glass France, 92400 Courbevoie (FR)
(72) Inventeur: SAUSSET, François, F-75014 Paris (FR); VILAIN, Laurent, F-92290 Chatenay Malabry (FR)
(74) Mandataire: Saint-Gobain Recherche
(86) Numéro de dépôt international: PCT/FR2014/050386
(87) Numéro de publication internationale: WO 2014/128424

(56) Documents cités:
- US-A1- 2005 023 337

## Description

La présente invention concerne le domaine de la découpe de morceaux de verre dans des plateaux de verre de grandes dimensions.

Le verre est généralement fabriqué sous la forme d'un ruban continu, par exemple un ruban continu de verre flotté ou de verre coulé.

Ce ruban est ensuite découpé en plateaux de verre dits « motherglass » (littéralement « verre mère » en français même si ce terme n'est pas utilisé) ; lesquelles feuilles sont par exemple des « PLF » (Plateaux de verre Large Format), typiquement de dimensions 3,21m par environ 6m ou des « DLF » de dimensions environ 2,55m par 3,21m.

Une étape d'analyse de défauts est réalisée avant cette découpe pour vérifier si le ruban de verre correspond à des spécifications de défauts. S'il existe des defaults hors spécification, les motherglass sont découpés en excluant une certaine longueur du ruban correspondant à la partie du ruban hors spécification.

En variante, les défauts sont par exemple marqués avec une encre de façon à pouvoir les identifier ultérieurement sans une nouvelle analyse. Après découpe, les motherglass peuvent alors être empilés dans des piles différentes selon les classes de spécification des défauts.

Les motherglass peuvent ensuite subir un ou plusieurs procédés de transformation (par exemple dépôt d'une couche, feuilletage, ...).

Après chaque transformation, les motherglass sont par exemple analysés pour détecter d'éventuels défauts et vérifier ainsi si la qualité correspond à une spécification prédéterminée. Dans le cas contraire, le motherglass est rejeté.

US 2005/0023337 A décrit un procédé de découpe d'un ruban de verre continu à l'aide d'un plan de découpe avec un seul niveau hiérarchique de découpe. Le procédé comprend une étape d'optimisation complémentaire consistant à générer un plan de découpe pour un travers sur lequel a été détecté un défaut de bord. Toutefois, ce procédé n'est pas utile à la découpe de motherglass car il ne comprend qu'un seul niveau hiérarchique de découpe.

US-A-2004/0134231 décrit un procédé de découpe de substrats en verre pour écrans LCD dans des motherglass. Les motherglass sont identifiés et des informations concernant les défauts de chaque motherglass telles que la position, la taille ou le type de défauts sont mémorisées de façon à pouvoir optimiser la découpe de substrats LCD de différentes tailles en fonction des informations de défauts de chaque motherglass.

Différents plans de découpe prédéterminés sont par exemple combinés avec différents motherglass et avec différents critères d'acceptation de façon à maximiser le nombre de substrats LCD pouvant être découpés dans un ensemble de plusieurs motherglass.

Cependant, il s'avère qu'une telle optimisation est parfois difficile à réaliser car les informations relatives aux défauts de chaque plateau ne sont pas toujours disponibles au moment où l'optimisation doit être lancée.

En outre, en supposant même que cela soit le cas, des problèmes de production tels que la casse d'un plateau, un changement d'ordre lors du dépilage, etc. peuvent remettre en cause l'efficacité de l'optimisation réalisée préalablement.

Un but de l'invention est de fournir un procédé permettant de diminuer les pertes dues aux défauts du verre.

Selon un aspect de l'invention, il s'agit d'un procédé de découpe de plusieurs morceaux de verre dans au moins un plateau de verre, comprenant successivement :
- une étape de génération automatique par un calculateur possédant une mémoire sur laquelle des programmes sont aptes à calculer un premier plan optimum de découpe par guillotine à plusieurs niveaux hiérarchiques (X,Y,Z,V) de différents morceaux dans chacune dudit au moins un plateau de verre, les niveaux hiérarchiques étant définis en fonction d'informations concernant la taille des morceaux à découper ;
- une étape de lecture d'informations relatives à des défauts dans ledit au moins un plateau de verre,
dans lequel le procédé comprend en outre ultérieurement et successivement :
- une étape de génération automatique par un calculateur possédant une mémoire sur laquelle des programmes sont aptes à calculer un deuxième plan optimum de découpe par guillotine auxdits plusieurs niveaux hiérarchiques dudit au moins un plateau de verre, à partir dudit premier plan optimum de découpe et en fonction d'au moins certaines des informations relatives aux défauts incluant des permutations de travers de découpe de même niveau hiérarchique au sein dudit au moins un plateau de verre ;
- une étape de découpe des morceaux de verre respectant ledit deuxième plan de découpe optimum généré.

A noter que, dans tout le texte, on entend par « automatique », une action réalisée par une machine exécutant un programme enregistré.

On entend par « plateau de verre », toute feuille de verre de dimensions finies et prédéterminées, qu'il s'agisse d'un PLF ou d'un DLF ou d'une feuille d'un autre format.

A noter également que par « découpe d'un plateau de verre », on entend découpe d'un plateau de verre nu ou sur lequel un revêtement a été déposé.

Le procédé selon l'invention a pour avantage de permettre d'optimiser davantage encore le procédé de découpe des morceaux de verre dans un plateau de verre de grandes dimensions ou dans un groupe de plusieurs plateaux de verre en tenant compte des défauts dans le verre.

Suivant des modes particuliers de réalisation, le procédé présente l'une ou plusieurs des caractéristiques suivantes, prise(s) isolément ou suivant toutes les combinaisons techniquement possibles :
- les permutations des travers de découpe sont effectuées à surface de chute constante entre le premier plan optimum de découpe et le deuxième plan optimum de découpe ;
- ladite génération automatique est réalisée à nombre et taille des chutes constants ;
- ledit premier plan optimum de découpe et ledit deuxième plan optimum de découpe sont ceux d'un seul plateau de verre ;
- ledit premier plan optimum de découpe et ledit deuxième plan optimum de découpe sont les plans de découpe de plusieurs plateaux de verre ;
- l'étape de génération automatique du deuxième plan de découpe inclut des permutations du premier plan optimum de découpe d'un plateau de verre parmi lesdits plusieurs plateaux de verre avec le premier plan optimum de découpe d'un autre plateau de verre parmi lesdits plusieurs plateaux de verre ;
- une valeur de complexité est attribuée à chacun des premiers plans optimums de découpe de chacun desdits plusieurs plateaux de verre, les permutations entre premiers plans optimums de découpe étant effectuées prioritairement en fonction desdites valeurs de complexité ;
- lesdites valeurs de complexité sont attribuées en fonction d'au moins l'un parmi : le nombre de chutes, la surface des chutes, la répartition des chutes dans les différents niveaux hiérarchiques de la découpe par guillotine ;
- les permutations des travers de découpe sont effectuées en respectant des contraintes ;
- les contraintes incluent des contraintes d'ordre de découpe desdits morceaux ;
- les contraintes incluent des contraintes de position des chutes ;
- le calculateur est programmé pour énumérer lesdites permutations des travers de découpe, le nouveau plan de découpe obtenu après une permutation étant retenu ou non par le calculateur en fonction de critères de performance du plan de découpe obtenu par rapport au plan de découpe précédent ;
- lesdites permutations des travers de découpe sont énumérées par le calculateur dans un ordre choisi en fonction de propriétés des travers de découpe ;
- lesdites propriétés des travers de découpe incluent au moins l'un parmi : le nombre de chutes, le nombre, de morceaux à découper, la surface des chutes ;
- les défauts à éliminer sont priorisés par le calculateur ;
- les défauts sont priorisés en fonction de leur position ;
- lesdites informations concernant les défauts incluent des valeurs de sévérité attribuées à au moins certains des défauts, la génération automatique du deuxième plan de découpe étant réalisée par le calculateur en fonction desdites valeurs de sévérité ;
- lesdits critères de performance incluent l'élimination du défaut le plus sévère ;
- lesdites permutations sont arrêtées après un temps de calcul prédéterminé même si d'autres permutations étaient programmées, le dernier plan de découpe obtenu par le calculateur devenant alors ledit deuxième plan de découpe ;
- ladite valeur prédéterminée de temps est inférieure à 1 minute sur une machine effectuant environ 10¹⁰ opérations (en virgule flottante) par seconde (Gflops) ;
- certains des morceaux à découper ont des dimensions différentes ; et
- le procédé comprenant, préalablement à la génération automatique dudit premier plan optimum de découpe :
   - une étape d'analyse des défauts dans ledit au moins un plateau de verre (8) ;
   - une étape de mémorisation d'informations relatives aux défauts détectés dans ledit au moins un plateau de verre (8),
l'étape de lecture réalisée après génération automatique du premier plan optimum de découpe comprenant une étape d'identification dudit au moins un plateau de verre (8) et une étape d'accès aux informations mémorisées lors de ladite étape d'analyse des défauts.

L'invention sera mieux comprise à la lecture de la description qui va suivre, donnée uniquement à titre d'exemple, et faite en se référant aux dessins annexés, sur lesquels :
- la figure 1 illustre un premier plan de découpe optimum d'un plateau de verre, avant prise en compte des défauts ;
- la figure 2 illustre une permutation de travers de découpe par guillotine de rang X, réalisé par un ordinateur en vue d'optimiser le premier plan de découpe en tenant compte des défauts ;
- les figures 3a) à 3d) sont des figures des plans de découpe illustrant l'utilisation d'un biais dans l'algorithme d'optimisation ;
- la figure 4 est un diagramme illustrant de façon schématique un exemple de procédé de fabrication de vitrages de bâtiments, de vitrages pour application solaire, par exemple photovoltaïque, de vitrages pour application OLED, de miroirs ou de vitrages automobiles, en illustrant les principales étapes ainsi qu'un exemple de chaîne logistique ; et
- la figure 5 représente de façon schématique un exemple de plateau de verre (i.e. motherglass) pour lequel différents défauts ont été répertoriés.
- la figure 6 est une vue d'un plateau de verre sur lequel des défauts sont présents ; et
- et la figure 7 est une vue analogue illustrant différentes zones d'acceptation des défauts dans les morceaux de verre à découper.

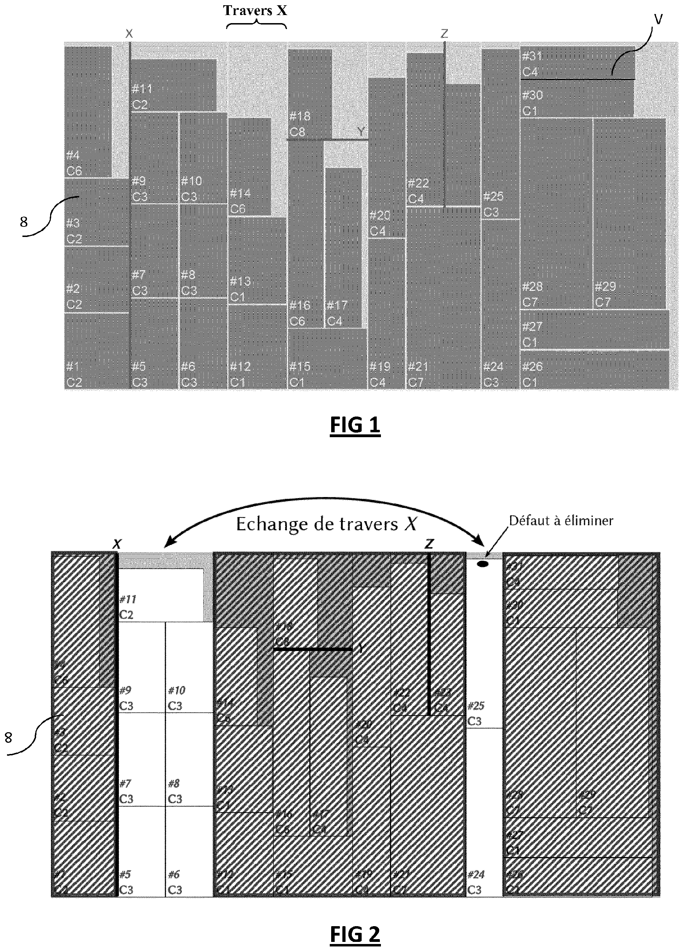

La figure 1 représente, à titre d'exemple purement illustratif, un premier plan de découpe optimum typique pour un plateau de verre monolithique. Les pièces à découper sont indiquées en grisé et marquées d'un numéro précédé d'un # et d'un numéro précédé d'un C, tandis que les chutes sont en gris clair. Le numéro précédé d'un # est le numéro d'ordre de découpe, le numéro précédé d'un C le numéro de chariot auquel la pièce est destinée. En plus gras sont indiqués des traits de découpe par guillotine (de part en part de la pièce à découper) pour trois niveaux hiérarchiques différents : X, Y et Z. En variante, le nombre de niveaux hiérarchiques est de tout type adapté. Il est par exemple de quatre : X, Y, Z et V.

Le premier niveau, généralement dénommé X, est dit de rang hiérarchique le plus bas (de façon arbitraire ; il pourrait s'agir également du rang le plus élevé). Le rang Y est de rang immédiatement supérieur au rang X. Le rang Z est de rang immédiatement supérieur au rang Y. Et le rang V est de rang immédiatement supérieur au rang Z.

La dénomination X, Y, Z, V est traditionnelle mais il peut s'agir de toute dénomination appropriée.

Les contraintes de découpe décrites ci-dessous sont liées au fait que les découpes par guillotine s'effectuent par définition de part en part d'un plateau ou travers, i.e. sur toute sa largeur ou toute sa longueur. L'invention vise spécifiquement les procédés de découpe par guillotine.

Les niveaux hiérarchiques de découpe par guillotine correspondent à l'ordre de découpe par guillotine. Pour un morceau particulier, les traits de découpe de rang X sont réalisés avant les traits de découpe de rang Y, eux-mêmes réalisés avant les traits de découpe de rang Z, etc.

Pour un même plateau, une fois un travers de rang X découpé, il est possible de commencer les découpes de rang Y sur chaque travers, et de même éventuellement pour les rangs supérieurs. En variante cependant, tous les traits de découpe de rang X sont par exemple réalisés avant les traits de découpe de rang Y, eux-mêmes réalisés avant les traits de rang Z, etc.

On comprend donc que sur un travers de rang X, on effectue d'abord des découpe de rang Y. Sur un travers de rang Y, on effectue d'abord des découpes de rang Z. Sur un travers de découpe de rang Z, on effectue d'abord des découpes de rang V.

En outre, on note que les traits de découpe de rangs adjacents sont perpendiculaires.

Sur la figure 1, les traits de découpe de rang X sont verticaux, les traits de découpe de rang Y horizontaux, les traits de découpe de rang Z verticaux et les traits de découpe de rang V verticaux.

En variante cependant, les traits de découpe de rang X sont horizontaux, les traits de découpe de rang Y verticaux, etc.

Les différents chariots correspondent à différents chariots sur lesquels les morceaux sont placés après découpe, i.e. à différents chemins de fabrication que les morceaux suivront après découpe. Il s'agit de leur numéro d'« aiguillage ».

Dans cet exemple, ce premier plan optimum de découpe ne tient pas compte d'éventuels défauts présents dans le verre. Il a été calculé uniquement en fonction de critères tels que la taille de morceaux à fabriquer et notamment de leur ordre nécessaire de fabrication.

L'optimisation du premier plan de découpe est de tout type adapté pour fournir un premier plan de découpe optimum.

En variante cependant, le premier plan de découpe tient également compte des défauts, comme expliqué plus loin ci-dessous.

Mais surtout, l'invention est particulière en ce qu'elle prévoit une deuxième optimisation, tenant compte des défauts et particulièrement rapide. Cette deuxième optimisation est en effet destinée à être réalisée très peu de temps avant la découpe (de l'ordre d'une minute ou moins avant la découpe), si bien qu'elle se doit d'être efficace dans un laps de temps très court. C'est ce que propose l'invention.

Comme illustré par la figure 2, selon un aspect de l'invention, le deuxième plan optimum de découpe est obtenu par génération automatique d'un plan de découpe à partir du premier plan optimum de découpe et en fonction d'au moins certaines des informations relatives aux défauts. Et surtout, la génération inclut des permutations de travers de découpe de même niveau hiérarchique au sein du plateau de verre (permutation entre deux travers de rang X sur la figure 2), pour une grande rapidité d'exécution du programme d'optimisation.

L'obtention des informations relatives aux défauts sera décrite plus loin.

L'algorithme implémenté consiste donc à permuter différents travers de découpe (X, Y, Z & V par exemple sur la figure 1, selon la dénomination classique de découpe par guillotine) tout en respectant les contraintes éventuelles sur l'ordre des pièces découpées.

Plus précisément, toutes les permutations de travers de niveau identique (X, Y, Z ou V) sont énumérées (cf. figure 2). Parmi ces permutations, seules celles respectant d'éventuelles contraintes sont retenues : par exemple, pour certains clients utilisant des chariots entre la ligne de découpe et la ligne de fabrication, l'ordre des pièces au sein d'un même chariot doit être respecté. Ainsi, l'ordre de découpe (par exemple de bas en haut puis de gauche à droite dans la figure ci-dessous) de deux pièces destinées à un chariot identique ne peut être modifié : les deux premiers travers X ne peuvent être permutés à cause des pièces #1 et #11, toutes deux destinées au chariot C2. De même, selon cette variante dans laquelle cette contrainte est imposée, l'échange de travers X illustré sur la figure 2 ne sera pas validé par l'algorithme puisqu'ils contiennent tous deux des morceaux destinés au chariot C3. Dans l'hypothèse contraire où une telle contrainte ne serait pas prise en compte par l'algorithme, l'échange de travers illustré sur la figure 2 serait bien entendu possible.

Des contraintes sur la position des chutes sont également possibles (par exemple dans le cas de lignes de rompage automatisées) provenant de contraintes mécaniques : les chutes sont alors par exemple positionnées obligatoirement sur l'une des extrémités d'un travers (ou les deux), ou peuvent être positionnées au milieu si leur taille est suffisante.

Ces contraintes dépendent de la configuration physique de la ligne de découpe sur laquelle l'outil est installé.

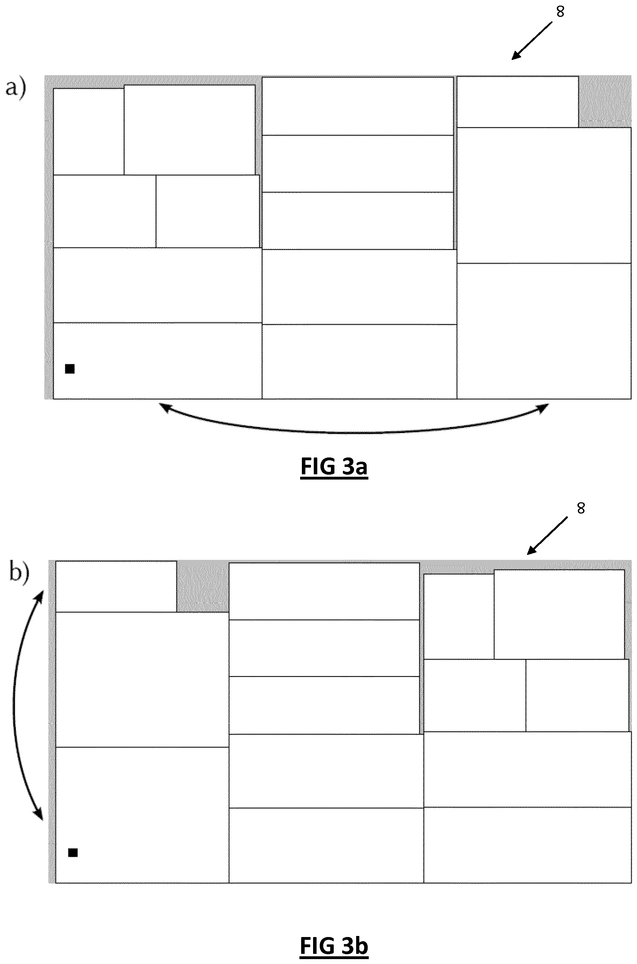

L'ordre de cette énumération peut être optimisé et ajusté en fonction des propriétés des travers (nombre de chutes, de pièces, surface de chutes, etc.) afin de biaiser l'exploration des différentes permutations/échanges de travers, comme nous le verrons en référence aux figures 3a) à 3d). Ceci dans le but d'accélérer l'identification d'une solution permettant d'éliminer tous les défauts, sans avoir à aller au bout de l'énumération afin de limiter le temps de calcul qui est limité par le caractère « temps réel » de l'optimisation de la découpe. On entend par biais une règle empirique de choix d'ordre d'énumération des permutations à réaliser dans l'algorithme d'optimisation. A titre d'exemple, on choisit par exemple de d'abord positionner le travers de rang X ayant la surface de chute la plus importante ou encore le travers de rang X ayant la chute de plus grande surface du côté du plateau de verre contenant le défaut à éliminer par l'algorithme.

De façon préférée, il existe des contraintes sur le temps de calcul (par exemple 30 secondes). Après un certain laps de temps prédéterminé et calculé au moyen d'une horloge, l'énumération s'arrête si elle n'était pas achevée. La solution obtenue ne sera alors pas forcément optimale mais néanmoins au moins équivalente, voire meilleure que la solution fournie par le premier plan de découpe. Mais surtout, on comprend l'intérêt du choix judicieux de l'ordre d'énumération des permutations possibles.

En variante, le temps de calcul maximum est de tout type adapté aux contraintes de temps de fabrication.

Selon une variante préférée, les défauts sont classés par sévérité en fonction de leur taille, type (verrier ou couche), etc. En pratique seuls les défauts possédant une sévérité supérieure à un certain seuil (pouvant varier selon les applications) seront pris en compte lors de l'optimisation et ainsi potentiellement éliminés. La priorité d'élimination de ces défauts est fixée par leur sévérité : le défaut ayant la sévérité la plus forte sera considéré de manière prioritaire lors de l'optimisation. Une fois un défaut éliminé en plaçant un travers de chute sur le défaut, les travers incluant ce défaut ne peuvent plus être déplacés par l'algorithme pour éliminer les autres défauts.

Plus précisément, lors de l'énumération effectuée par l'algorithme, l'emplacement des défauts est pris en compte pour retenir ou non le plan de découpe obtenu par la permutation considérée. Les règles sont par exemple les suivantes :
- Un nouveau plan de découpe (obtenu après permutation) n'est retenu par l'algorithme que si les pertes de verre (dues à un défaut présent sur une pièce à découper) sont inférieures à celles du meilleur plan parmi ceux déjà testés lors de l'énumération. Plus précisément, ce critère s'applique pour le défaut le plus critique/sévère en priorité, puis au second défaut si aucune n'amélioration n'est possible au niveau du premier défaut, et ainsi de suite. A noter que ceci n'aboutit pas forcément à la minimisation de la quantité totale des pertes de verre liées aux défauts, mais plutôt à celle liée au défaut le plus critique/sévère, puis à celle liée au second défaut, etc.
- On cherche à minimiser la perte de matière induite par un défaut, c'est-à-dire que l'algorithme cherche à placer les chutes géométriques (créées par le logiciel d'optimisation de la découpe ayant engendré le plan de découpe) sur les défauts à éliminer. Si ceci n'est pas possible, l'algorithme cherche à placer la pièce la plus petite possible sur le défaut à éliminer. A noter que dans le cas d'applications destinées par exemple au bâtiment, le verre découpé est destiné à fabriquer des vitrages isolants où une bande de mastic/butyl est apposée sur le pourtour du verre sur une largeur typique de 10-15mm. La présence de défauts dans cette bande n'est alors pas gênante et l'algorithme considère ce cas comme intermédiaire entre un défaut présent dans une chute et un défaut présent dans une pièce. Ainsi, un défaut sera placé préférentiellement dans une chute, puis dans cette marge dédiée au futur châssis et enfin dans une pièce de surface la plus petite possible. Ceci peut être étendu au cas où des formes complexes (cercles, polygones, etc.) sont ensuite découpées au sein de la pièce rectangulaire. La géométrie de la marge devient alors plus complexe et n'est plus forcément une bande de largeur fixe.

Les figures 3a) à 3d) illustrent un exemple permettant d'illustrer une mise en œuvre possible de l'algorithme d'optimisation.

Comme visible sur la figure 3a), on note la présence d'un défaut (carré noir).

Les permutations des travers de niveaux hiérarchiques identiques sont d'abord énumérées par l'algorithme.

Ensuite, toutes les permutations ne respectant pas les contraintes de fabrication, comme l'ordre d'arrivée des morceaux sur les chariots, sont écartées par l'algorithme.

L'algorithme d'énumération de base est le suivant (« on » s'entend du programme) :
i)- on stocke la configuration initiale ;
ii)- on considère le travers de niveau n (en commençant à n=0, plateau de verre entier) ;
iii)- Si le défaut le plus sévère à éliminer est dans ce travers (c'est toujours le cas à rang n=0), on cherche le travers « fils » de niveau supérieur n + 1 contenant ce défaut et on retourne à la ligne précédente ii) pour ce travers. Si le défaut n'est pas dans ce travers, on répète l'étape de la ligne précédente ii) pour le travers « frère » de même niveau contenant ce défaut ;
iv)- on répète iii) en augmentant de niveau jusqu'à arriver au travers de niveau le plus élevé n + p contenant ce défaut ;
v)- Si ce travers est une chute, on stocke la configuration et on passe au défaut suivant à éliminer (on recommence l'algorithme pour le défaut suivant sans modifier la position des travers contenant le ou les premier(s) défaut(s), i.e. les défauts précédemment traités). Sinon, avant de passer à la ligne vi), on stocke la configuration si la surface du travers est inférieure ou égale à la surface du travers contenant le défaut dans la configuration précédemment stockée ;
vi) on énumère (par exemple par ordre lexicographique ou avec un biais) toutes les permutations possibles de ce travers avec ses travers « frères » de même niveau hiérarchique n + p et de même « parent » (de niveau n + p - 1). Pour chaque permutation, on répète l'étape de la ligne ii) pour le travers «frère» de niveau n + p contenant le défaut (i.e. on vérifie la présence de travers fils dans ce nouveau travers contenant le défaut et on cherche le travers fils contenant le défaut) ;
vii)-Si aucune permutation ne conduit à placer le défaut dans une chute de niveau >= n + p (parmi les frères et leurs descendants), on descend d'un niveau hiérarchique n + p - 1 et on recommence à partir de la ligne vi) pour le parent de niveau n + p - 1.
viii)- On répète la ligne vii) jusqu'à descendre à n=0, où il n'y a plus de « frères ».

Il est à noter que sur les figures 3a) à 3d), le programme a en outre intégré un biais.

Le biais est le suivant : au lieu de prendre l'ordre lexicographique comme indiqué dans l'algorithme ci-dessus pour l'ordre d'énumération des permutations, on trie les travers en fonction de la surface de la plus grande chute (en surface) qu'ils contiennent.

Sur le figure 3a), on échange de ce fait X2 avec X4 pour éliminer le défaut car X4 possède la plus grande chute en surface.

Sur la figure 3b), on échange X4Y1 avec X4Y3.

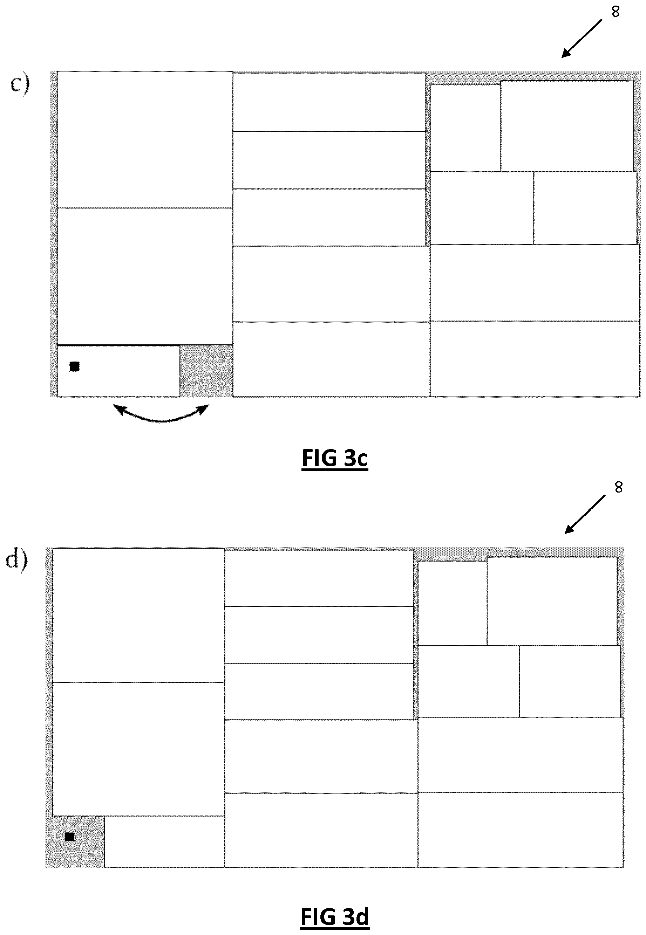

Sur la figure 3c), on échange X4Y3Z1 avec X4Y3Z2.

Le défaut est éliminé sur la figure 3d).

Dans le procédé décrit ci-dessus, le premier plan optimum de découpe et le deuxième plan optimum de découpe sont ceux d'un seul et même plateau de verre. L'optimisation est réalisée indépendamment pour chaque plateau de verre.

En variante, afin d'augmenter le taux d'élimination des défauts, il est envisagé de travailler à l'échelle de quelques plateaux (typiquement moins de 4). Cela est possible en pratique si l'identification des plateaux est effectuée suffisamment en amont de la ligne de découpe. L'information sur les positions des défauts peut alors être exploitée de manière plus globale. Il est ainsi possible de :
- permuter les plans de découpe des plateaux en attente d'être découpés afin de minimiser les pertes en exploitant le fait que tous les plans de découpe ne sont pas équivalents pour éliminer les défauts d'une même carte.
- choisir le plan de découpe le plus adapté à la carte de défaut du plateau en attente parmi l'ensemble des plans de découpe à venir (plans calculés au préalable lors de l'optimisation effectuée en amont pour un lot de plusieurs dizaines de plateaux par exemple). A noter que ceci n'est possible que dans la limite du respect des éventuelles contraintes d'ordre des pièces à découper.

Plusieurs solutions sont possibles :
- Toutes les permutations de plateaux possibles sont effectuées, avec au sein de chaque plateau, l'optimisation du plan de découpe en présence de défauts présentée précédemment. La permutation de plateau minimisant les pertes sur l'ensemble des plateaux considérés est alors retenue.
- Il est également possible d'exploiter une corrélation empirique qui a été identifiée entre la complexité du plan de découpe (dépendant par exemple du nombre de chutes, de la surface de chutes, de la répartition des chutes en fonction de leur niveau dans la hiérarchie issue de la découpe par guillotine ou d'un autre critère de tout type adapté) et sa capacité à éliminer un défaut. Cela permet de diminuer nettement les temps de calcul en évitant de tester toutes les permutations de plateaux possibles (dont le nombre peut devenir rédhibitoire au-delà de quelques plateaux seulement).

Ainsi, une valeur de complexité est attribuée à chacun des premiers plans optimums de découpe de chacun desdits plusieurs plateaux de verre, les permutations entre premiers plans (optimums) de découpe étant effectuées prioritairement en fonction desdites valeurs de complexité. Les valeurs de complexité sont attribuées en fonction d'au moins l'un parmi : le nombre de chutes, la surface des chutes, la répartition des chutes dans les différents niveaux hiérarchiques de la découpe par guillotine.

Après attribution d'un plan de découpe à un plateau, l'optimisation décrite plus haut pour un plateau est appliquée.

En variante cependant, on permute les travers de découpe de rang le plus bas, i.e. de rang X, entre plateaux et non sur un seul plateau.

Dans les modes de réalisation décrit ci-dessus, les permutations des travers de découpe par guillotine sont effectuées à taille et nombre de chute constants entre le premier plan optimum de découpe et le deuxième plan optimum de découpe.

En variante, l'algorithme d'optimisation permet de réorganiser le plan de découpe en scindant les chutes en sous-parties pour augmenter le nombre de possibilités de permutations.

D'une manière générale, les permutations des travers de découpe sont effectuées à surface de chute constante entre le premier plan optimum de découpe et le deuxième plan optimum de découpe. En effet, une permutation de travers de découpe de mêmes niveaux ne change pas la surface de chute.

Le cadre plus global de l'invention va maintenant être décrit.

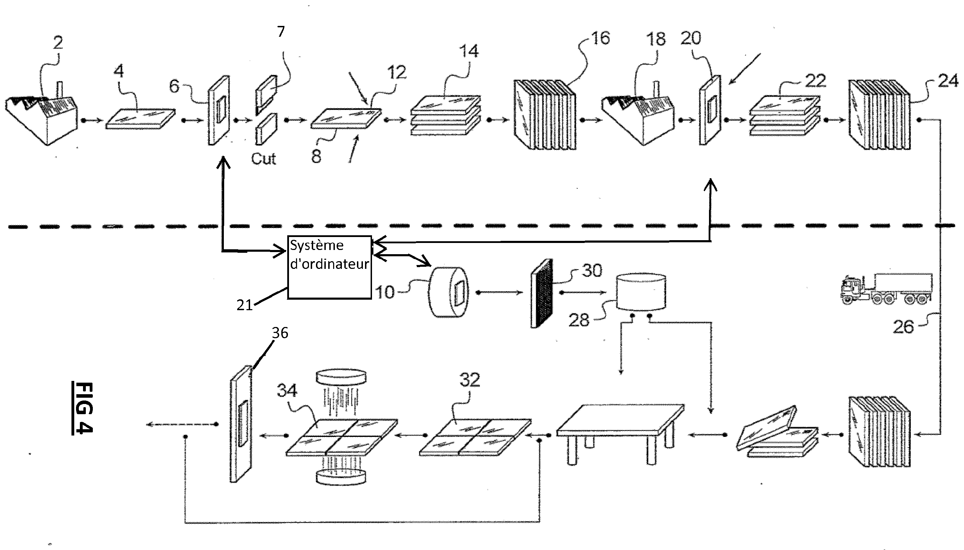

La figure 4 est un diagramme illustrant un exemple non limitatif de procédé de fabrication auquel peuvent s'appliquer les différents aspects de l'invention décrits ci-dessus, de façon à mieux comprendre le contexte dans lequel l'invention a été réalisée et dans lequel l'invention peut s'appliquer.

Dans cet exemple, la partie supérieure du diagramme concerne les étapes de fabrication d'un plateau de verre chez un fabricant de verre sur un premier site de fabrication, et la partie inférieure les étapes de fabrication d'un verre d'application tel qu'un verre pour vitrage automobile, vitrage pour application solaire, par exemple photovoltaïque, vitrage pour application OLED, miroir ou vitrage de bâtiment chez un deuxième fabricant, client du premier, sur un deuxième site de fabrication. Ceci n'est pas limitatif. Une ou plusieurs étapes supplémentaires peuvent être réalisées sur le premier et/ou le deuxième site. En outre, bien que toutes les étapes de fabrication du premier fabricant soient illustrées comme réalisées sur un seul site de fabrication, il peut s'agir de différents sites, de même que les étapes de fabrication réalisées chez le second fabricant. En outre, bien que le deuxième fabricant soit décrit comme un client du premier fabricant, il peut s'agir en variante d'une division ou filiale du premier fabricant.

Ainsi, d'une manière générale, l'ensemble des étapes peuvent en variante être réalisées par un même fabricant ou la division du travail être de tout type adapté.

Dans cet exemple particulier, le premier fabricant produit dans une usine 2 dite de « verre float », un ruban continu 4 de verre flotté sur un bain d'étain. Des défauts du ruban 4 sont analysés par un dispositif de détection 6 (de tout type adapté), puis le ruban découpé en plateaux de verre 8 (également appelés « motherglass » ou « PLF » pour Plateau Large Format).

A noter que le dispositif de détection 6 est par exemple un dispositif appelé « scanner » dans l'industrie et destiné à analyser le verre pour y détecter des défauts.

Des informations concernant des attributs relatifs à chaque plateau de verre 8 sont mémorisées dans une base de données 10. Les attributs peuvent inclure, par exemple, l'épaisseur du verre, la date de fabrication, l'heure de fabrication, le site de fabrication, le numéro de série de la machine de fabrication, le nombre de défauts, la position des défauts, le type de défauts, la densité des défauts, a critère de sévérité du défaut, ou toute combinaison. Ceci n'est pas limitatif. D'autres attributs du ruban de verre peuvent être stockés dans la base de données. La base de données 10 peut être centralisée ou distribuée et peut inclure une ou plusieurs sous-bases de données. Les sous-bases de données peuvent être connectées à une base de données principale et/ou interconnectées en utilisant différents moyens de communications. La base de données et/ou les sous-bases de données peuvent prendre diverses formes. Par exemple, la base de données et/ou sous-bases de données peuvent chacune prendre la forme d'une unité de stockage portative (e.g. disque, CD-ROM, DVD-ROM, clé USB de stockage, ou autre support analogue).

A noter également que le terme « défaut » est utilisé ici au sens large et n'est pas limité à une imperfection dans le plateau de verre. Il peut s'agir d'une caractéristique distinctive du verre. En outre, une imperfection peut être dans certains cas acceptable et dans d'autres cas ne pas l'être, par exemple en fonction de l'application envisagée pour le plateau de verre. Les plateaux de verre destinés au domaine des semi-conducteurs seront par exemple plus sensibles à des défauts de surface, tandis que dans le domaine des vitrages automobiles ou de bâtiment, les défauts en transmission ou en réflexion seront plus importants.

Après analyse de la présence de défauts, le ruban de verre est découpé en plateaux de verre (motherglass) en utilisant un dispositif de découpe. Les zones du ruban de verre qui présentent des défauts considérés comme non acceptables ou en dehors de normes ou spécifications peuvent être éliminés durant la phase de découpe des plateaux.

Un dispositif de cartographie, incluant le dispositif de détection, peut être utilisé pour générer la carte des attributs, par exemple en scannant le ruban de verre 4 et en enregistrant la position et le type de chaque défaut présent dans le ruban de verre 4 dans la base de données 10 qui est maintenue dans un dispositif de stockage. Un critère de sévérité est également enregistré dans la base de données. Il s'agit d'un paramètre qualitatif fournissant un degré de sévérité d'un défaut. Par exemple, le critère de sévérité peut être exprimé comme une distance entre défauts adjacents inférieure à une valeur prédéterminée ou une densité de défauts d'une certaine taille supérieure à une valeur prédéterminée.

Les informations relatives aux défauts de chaque plateau de verre 8 (motherglass) sont stockées dans la base de données 10. Un identifiant 12, par exemple un code barre, une puce RFID, ou un autre identifiant 12 de tout type adapté est utilisé pour identifier le plateau de verre 8. S'agissant d'un code barre, le marquage de l'identifiant est par exemple réalisé avec un encre ou un laser.

La carte des attributs peut prendre différentes formes. Il s'agit, d'une manière générale, d'un fichier (incluant un ou plusieurs sous-fichiers), par exemple un fichier électronique, qui inclut par exemple la position, la taille et le type de chaque défaut du plateau de verre 8 et/ou le critère de sévérité du défaut. La carte des attributs peut également inclure des informations supplémentaires telles qu'une sévérité du défaut, la composition du verre, la date de fabrication, etc. La carte des attributs est par exemple sous la forme d'un tableau.

Dans un mode de réalisation, les attributs de chaque plateau, y compris la position des défauts et le critère de sévérité d'un défaut peuvent être stockés dans la base de données 10 dans un support de stockage comme un disque dur ou un serveur de stockage, etc. Par exemple, la base de données 10 peut faire partie du système informatique 21. Toutefois, en variante ou en complément, les attributs peuvent également être stockés dans une mémoire électronique, etc. Dans un mode de réalisation, le support de stockage, y compris le disque dur, le serveur de stockage, la mémoire électronique, etc. peuvent être lus à l'aide d'un ordinateur en communication avec la base de données 10 par le biais d'une liaison de communication. Le lien de communication peut être établi via un fil direct, via Internet («le nuage») ou tout autre réseau sans fil tel qu'un réseau cellulaire.

Les plateaux de verre 8 obtenus sont alors agencés en une pile de plateaux de verre 14. Les piles de plateaux 14 peuvent être stockées sous forme de palettes 16 de plateaux de verre et transportées vers l'unité de traitement 18 pour traitement. L'unité de traitement 18 peut être située à un endroit différent de l'usine 2. Dans un mode de réalisation, dans l'unité de traitement 18, les plateaux de verre 16 sont traitées par le dépôt d'un revêtement à l'aide d'un "coater" Par exemple, au moins une couche ou un revêtement diélectrique peut être déposé sur l'un ou plusieurs des plateaux de verre.

Après traitement à l'unité de traitement 18, les plateaux de verre 16 peuvent être analysés ou inspectés par un deuxième dispositif de détection 20 (par exemple un scanner). Dans un mode de réalisation, le deuxième dispositif de détection 20 fait partie du dispositif de cartographie. L'analyse des plateaux de verre 16 par le dispositif 20 permet la détection de défauts supplémentaires qui peuvent avoir été générés au cours de la transformation dans l'unité de traitement (par exemple, générée au cours du processus de dépôt de couches).

En plus d'être en mesure d'analyser les plateaux de verre 8 en piles de verre 16 pour d'autres défauts, le dispositif de détection 20 peut encore lire l'identifiant unique sur chacun des plateaux de verre 8. En identifiant chaque plateau de verre 8 dans la pile 16 de plateaux de verre 8, les défauts supplémentaires détectés par le dispositif 20 peuvent être liés à l'identifiant associé au plateau et ajoutés aux autres défauts du plateau de verre correspondant. Par conséquent, dans un mode de réalisation, la base de données 10 est mise à jour en utilisant le système informatique 21 avec les informations concernant tout défaut supplémentaire se rapportant à chaque plateau de verre 8.

Après le traitement de la pile 16 de plateaux de verre 8 à l'unité de traitement et en analysant les plateaux de verre 8 en utilisant le dispositif de détection 20, les plateaux de verre 8 sont empilés à nouveau en une pile 22 et stockés dans l'entrepôt 24. L'entrepôt 24 peut être sur le même site que l'unité de traitement 18, ou sur un site différent. Dans un mode de réalisation, les plateaux de verre 8 peuvent être agencés et stockés sur la base des informations de défauts présents dans les plateaux de verre 8.

Les plateaux de verre 8 empilés et stockés peuvent alors être transportés (par exemple, en utilisant des camions ou des trains, ou tout autre moyen de transport) pour le client, c'est à dire le second fabricant de verre. Le client reçoit la pile 22 de plateaux de verre 8 venant de l'entrepôt 24 et met en œuvre d'autres procédés sur les plateaux de verre pour fabriquer des produits en verre. Par exemple, le client peut couper les plateaux de verre en plusieurs morceaux de formes ou dimensions désirées. Les morceaux de verre découpés peuvent avoir la même forme ou des formes différentes. De même, les morceaux de verre coupés peuvent avoir la même dimension ou des dimensions différentes, etc.

Du côté du client, un système informatique 28 peut être utilisé pour définir les contours de découpe des morceaux de verre. Le système informatique 28 peut exécuter un programme qui fournit un premier plan de découpe optimum pour produire des morceaux de verre désirés tout en minimisant la quantité de verre qui est rejeté et recyclé en raison de la présence de défauts qui sont en dehors des spécifications et qui sont, par exemple, fixés par le deuxième fabricant ou le client final (par exemple, le constructeur automobile ou fabricant de fenêtres, etc.) Le programme peut être intégré dans un support lisible par une machine codé avec des instructions pour exécuter l'opération de découpe.

Le client ou le deuxième fabricant utilise un lecteur pour lire l'identifiant 12. Par la lecture de l'identifiant 12, le client peut accéder à la base de données 10 pour récupérer des informations relatives aux attributs du plateau de verre 8, qui sont associés à l'identifiant 12. Dans un mode de réalisation, le système informatique 28 est configuré pour accéder à la base de données 10 pour récupérer des informations relatives aux attributs du plateau de verre 8 comportant l'identifiant 12 qui est lu par le lecteur. Les attributs comprennent, entre autres paramètres, la position du défaut, le critère de difficulté et le critère de gravité. Dans un mode de réalisation, le système informatique 28 peut accéder à la base de données 10 à travers un réseau tel que l'Internet ou par l'intermédiaire d'une ligne de communication dédiée, ou la communication sans fil (par exemple, la communication cellulaire).

Dans un mode de réalisation, certaines informations relatives aux attributs du plateau de verre est filtrée en utilisant un filtre 30. On notera que le filtre 30 peut être un programme informatique qui est exécutable par le système informatique 28, par exemple par un processeur du système informatique 28. Le filtre 30 peut résider dans le système informatique 28 dans un mode de réalisation. Sinon, le filtre 30 peut être distinct du système informatique 28. À cause du filtre 30, le client n'a pas accès à la base de données complète mais uniquement à une partie sélectionnée de la base de données contenant les attributs des plateaux de verre 8. La quantité d'informations à laquelle le client peut avoir accès est contrôlée par le premier fabricant utilisant le filtre 30. Par exemple, la quantité ou le niveau d'information qui peut être consulté par le deuxième fabricant ou un client peut être fixé par le premier fabricant selon un montant de redevances ou d'un droit ou d'une prime que le client paie pour le premier fabricant. Par exemple, le premier fabricant peut définir une pluralité de niveaux d'accès tels que trois niveaux d'accès, un niveau plus élevé, un niveau moyen et un niveau inférieur (par exemple, désigné comme le platine, l'or et l'argent dans un mode de réalisation) avec le niveau supérieur (par exemple, le platine) donnant accès à la plus grande quantité d'informations dans la base de données et avec le plus faible niveau (par exemple, de l'argent) donnant accès à la plus petite quantité d'informations dans la base de données. Par exemple, le client peut acheter des droits pour accéder au plus haut niveau (par exemple, le platine) en payant une prime plus élevée. D'autre part, le client peut aussi acheter les droits d'accès seulement au niveau inférieur (par exemple, de l'argent) en payant une prime moindre. Bien que trois niveaux soient évoqués dans ce document, il sera apprécié que n'importe quel nombre de niveaux d'accès peut être fourni dans d'autres modes de réalisation.

Selon un mode de réalisation, un niveau d'accès à la base de données 10 est prévu pour le client de façon à permettre au client de récupérer au moins une partie de la carte d'attributs de chaque plateau dans la pile de plateaux. Plus précisément, dans un mode de réalisation, le système 28 informatique comprend un produit informatique, par exemple un support lisible par machine, qui est codé avec des instructions lisibles par machine ainsi que la carte d'attributs ne peut être utilisé par le système informatique 28 pour fournir une procédure de découpe optimisée pour la fabrication des morceaux de verre souhaités. Toutefois, les instructions lisibles par machine empêchent l'utilisateur du système informatique 28 de récupérer, d'enregistrer et / ou d'afficher des cartes de caractéristiques ou d'attributs accessibles par le système informatique 28. De cette façon, le client est empêché de recueillir des renseignements sur les défauts des plateaux de verre pour effectuer de l'exploration de données ou des analyses statistiques.

Selon le niveau d'accès, une partie plus ou moins grande de l'information stockée dans la base de données 10 est fournie au client. Dans un mode de réalisation, le premier fabricant construit une sous-base de données de la base de données 10 qui peut être consultée par le client voulu d'après le niveau d'accès acquis par le client en payant une prime, ou des redevances. La sous-base de données contient des informations filtrées à l'aide du filtre 30. Par conséquent, le filtre 30 peut être configuré par le premier fabricant pour fournir la sous-base de données en fonction du niveau d'accès acquis par le client.

Dans ce mode de réalisation, les données de base de données 10 peuvent ne pas être cryptées puisque le client ne dispose pas d'un accès direct à la base de données 10. En effet, le client peut seulement avoir accès et lire les données stockées dans la sous-base de données qui est personnalisée en fonction du niveau d'accès acquis par le client en payant une certaine prime. Par conséquent, le client n'est pas en mesure de lire l'intégralité des données ou des informations stockées dans la base de données 10, mais peut simplement lire les données ou informations stockées dans la sous-base de données qui est destinée ou fournie au client.

Dans un autre mode de réalisation, un accès à la base de données 10 peut être fourni au client. Dans ce cas, les données de base de données 10 sont cryptées. Le cryptage de la base de données peut être réalisé en utilisant des algorithmes de cryptage connus appropriés. Par exemple, le chiffrement peut être effectué en utilisant un ou plusieurs processeurs du système informatique 21. Le client est muni d'une touche spécifique pour lire les données spécifiques stockées dans la base de données 10. La clé permet au client de "déverrouiller" et lire les données qui sont destinés uniquement au client. La clé ne permet pas au client de lire d'autres données stockées dans la base de données et qui ne pas destinées au client. En d'autres termes, l'accès aux données contenues dans la base de données 10 est limité suivant un niveau d'accès souhaité acquis par le client en payant une prime.

La clé peut être un mot de passe ou d'autres types d'identification fournis au client ou à un programme informatique (ou un lien vers un programme informatique) qui permet au client (par exemple le système informatique 28 qui est conçu pour effectuer l'opération de découpe) d'accéder aux données dans la base de données 10.

Dans cette variante, le système informatique 28 peut également inclure un produit informatique, par exemple un support lisible par une machine, qui est codé avec des instructions lisibles par une machine de façon à ce que la carte d'attributs ne puisse être utilisée par le système informatique 28 uniquement pour fournir une procédure de découpe optimisée pour la production des morceaux de verre souhaités. Toutefois, les instructions lisibles par une machine empêchent l'utilisateur du système informatique 28 de récupérer, d'enregistrer et / ou d'afficher des cartes de caractéristiques ou d'attributs accessibles par le système informatique 28. De cette façon, le client est empêché de recueillir des renseignements de défauts sur les plateaux de verre dans le but d'effectuer l'exploration de données ou des analyses statistiques.

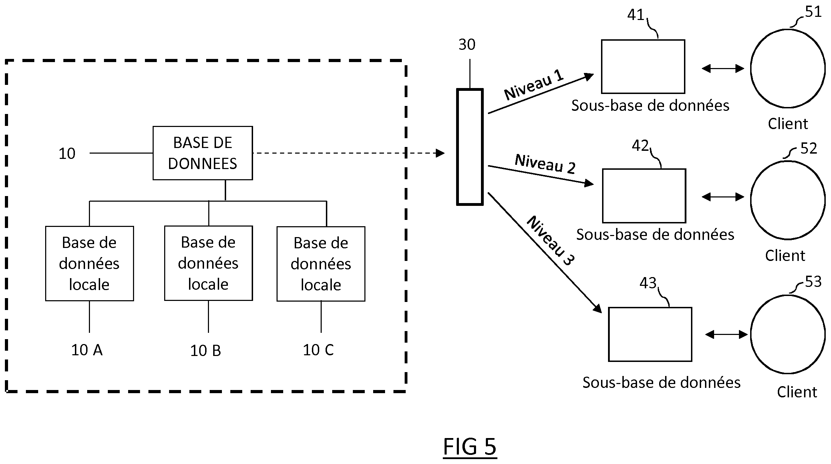

La figure 5 est un diagramme schématique montrant un exemple de fourniture de sous-bases de données à des clients spécifiques, selon un mode de réalisation. Les attributs des plateaux de verre 8 sont stockés dans la base de données 10. Dans un mode de réalisation de la base de données 10 peut comprendre une pluralité de bases de données locales 10A, 10B et 10C, par exemple à partir de différentes usines du premier fabricant. Dans un autre mode de réalisation, la base de données 10 peut être configurée pour communiquer avec des bases de données locales 10A, 10B et 10C pour récupérer les données qui y sont stockées. Par exemple, la base de données 10 peut être hébergée sur un serveur de stockage qui est configuré pour accéder à la pluralité de bases de données locales et récupérer les données qui y stockées. Un filtre 30 peut être utilisé par le premier fabricant pour fournir une pluralité de sous-bases de données 41, 42 et 43 à partir de la base de données 10. La sous-base de données 41 ne peut être consultée par le client 51, la sous-base de données 42 ne peut être consultée par le client 52, et la sous-base de données 43 ne peut être consultée par le client 53. Le filtre 30 peut être configuré en fonction du niveau d'accès à des données acquis par chacun des clients 51, 52 et 53. Par exemple, le filtre 30 peut être configuré au niveau 1 pour fournir des sous-bases 41 contenant des données de niveau 1 (par exemple, niveau argent), le filtre 30 peut être configuré au niveau 2 pour fournir des sous-bases 42 contenant les données de niveau 2 (par exemple, niveau or), et le filtre 30 peut être configuré au niveau 3 pour fournir des sous-bases 43 contenant des données de niveau 3 (par exemple, niveau platine). Par exemple le niveau 1 (par exemple, de l'argent) peut générer des sous-bases de données 41 qui contiennent une première partie limitée des données concernant les attributs. Par exemple au niveau 1, la sous-base de données 41 ne peut contenir que la position des défauts et non les caractéristiques des défauts tels que la taille ou la forme du défaut. Par exemple au niveau 2, la sous-base de données 42 peut contenir, en plus de la position des défauts, la taille des défauts et la forme des défauts. Par exemple, au niveau 3, la sous-base de données 43 peut contenir, en plus de la position des défauts, la taille et la forme des défauts, le critère de sévérité, etc. Par conséquent, le niveau 3 est un plus grand accès niveau donnant accès à plus d'informations et de données dans la base de données 10.

Dans un mode de réalisation, les trois niveaux sont trois niveaux de sévérité de défaut acceptables, si bien que plus ou moins de défauts sont transmis au client en fonction de la qualité attendue.

Dans un mode de réalisation, les sous-bases de données 41, 42 et 43 peuvent être cryptées afin d'empêcher les clients respectifs 51, 52 et 53 d'être en mesure d'effectuer des analyses statistiques sur les données stockées dans les bases de données 41, 42 et 43. Par exemple, le client 51 peut être en mesure de lire les données stockées dans la base de données 41 dans la mesure où les données stockées dans la base de données 41 sont seulement utilisées à des fins de découpe et ne pas effectuer d'analyse des données stockées dans la sous-base de données 41 pour effectuer une analyse statistique et extraire des informations statistiques sur les attributs (par exemple, des défauts) dans les plateaux de verre 8. Par exemple, le système informatique 28 du client peut comprendre un produit informatique, par exemple un support lisible par machine, codé avec des instructions exécutables par une machine qui permet au client de lire les données stockées dans la base de données (par exemple 41, 42, 43) pour fournir une procédure de découpe optimisée mais empêche l'utilisateur de l'ordinateur du système de récupération 28, d'enregistrer et/ou d'afficher des cartes de caractéristiques.

Dans un mode de réalisation, les données ne sont pas cryptées à un moment ou un autre du procédé et donc lisibles par le client. Cependant, le dispositif vise toujours à empêcher la collecte de données sauvage et à grande échelle.

Selon un mode de réalisation, la génération du premier et/ou du deuxième plan optimum de découpe est effectuée sur la base des données stockées dans la base de données, les données comprenant des attributs de chaque plateau de verre à découper. Générer le plan de découpe peut être effectué soit par le premier fabricant ou par le client ou second fabricant ou encore par une tierce partie indépendante du premier fabricant et du deuxième fabricant. Dans un mode de réalisation, le tiers peut être, par exemple, une entreprise qui fabrique des dispositifs de découpe ou des outils pour découper les plateaux de verre. A noter que le premier plan de découpe optimum peut aussi ne pas tenir compte des défauts, seul le deuxième plan de découpe en tenant compte dans ce cas.

Dans le cas où l'optimisation ou la génération du premier plan de découpe est réalisée chez le premier fabricant et où le premier plan de découpe tient compte des défauts, puisque le premier fabricant dispose d'un accès complet à la base de données 10, il n'est pas nécessaire de chiffrer la base de données. Dans ce scénario, le premier fabricant peut recevoir une spécification (dimensions, formes, etc.) des morceaux de verre qui doivent être fabriqués de la part du deuxième fabricant. Le premier fabricant peut utiliser les contraintes de forme et de dimension et également utiliser les attributs du plateau de verre dont la position de tous les défauts, etc. pour générer le premier plan de découpe ou envoyer un fichier au client contenant le premier plan de découpe pour les plateaux de verre livrés chez le client.

Dans le cas, cependant, où la génération du premier et/ou du deuxième plan optimum de découpe est réalisée chez le second fabricant ou chez le tiers, la base de données 10 est cryptée afin de s'assurer que les données stockées dans la base de données 10 ne soient pas accessibles ou que seules les données pour lesquelles le client (deuxième fabricant) ou un tiers ont payé soient accessibles. Dans ce scénario, le premier fabricant fournit simplement les attributs achetés par le client pour le client ou une entité tierce qui à son tour utilise les données pour générer le premier plan optimum de découpe.

La génération du deuxième plan optimum de découpe est normalement destinée à être réalisée chez le second fabricant ou client ou du moins chez le fabricant réalisant la découpe des morceaux de verre dans les plateaux de verre. Le but de la deuxième optimisation est en effet d'être réalisé au plus proche (dans le temps) de l'opération de découpe. Elle est typiquement réalisée par une lecture des identifiants des plateaux de verre moins d'une minute avant le positionnement du plateau de verre correspondant sur la table de découpe, ceci afin de s'assurer que le plateau de verre pour lequel l'optimisation est réalisée sera effectivement découpé.

En variante cependant, il est possible de réaliser la lecture de l'identifiant plus tôt, par exemple lors du dépilage ou immédiatement avant le dépilage des plateaux de verre chez le second fabricant.

La génération automatique du deuxième plan optimum de découpe est par exemple calculée par le même système informatique 28. En variante cependant, il s'agit d'un autre système informatique, par exemple apte à communiquer avec le système informatique 28.

Après la génération du deuxième plan optimum de découpe, les plateaux de verre sont découpés par guillotine (i.e. suivant toute la largeur du verre et suivant différentes orientations successives de niveau hiérarchique différent) selon le plan découpe que le système informatique 28 a calculé pour chaque plateau de verre 8. Dans un mode de réalisation, les morceaux de verre qui sont obtenus après la découpe des plateaux de verre 8 peuvent être lavés 34. Les morceaux de verre découpés et lavés peuvent être éventuellement analysés par un troisième dispositif de détection 36 et ensuite envoyé à l'assemblage, par exemple, être monté comme fenêtres ou pare-brise d'automobile, ou comme vitres d'un bâtiment, etc. Dans un pare-brise automobile, deux morceaux découpés de verre sont courbées et collés (i.e. feuilletés) ensemble par l'intermédiaire d'une intercalaire thermoplastique, par exemple du type PVB. Dans un vitrage pour le bâtiment, deux ou trois morceaux de verre sont assemblés dans un cadre pour former respectivement un double ou un triple vitrage, séparés par exemple par des lames de gaz, choisi par exemple parmi l'argon ou l'air.

Selon un mode de réalisation, le premier plan optimum de découpe est généré de manière dynamique pour chacun des plateaux de verre sur la base ou non de l'information concernant les défauts stockée dans la base de données 10.

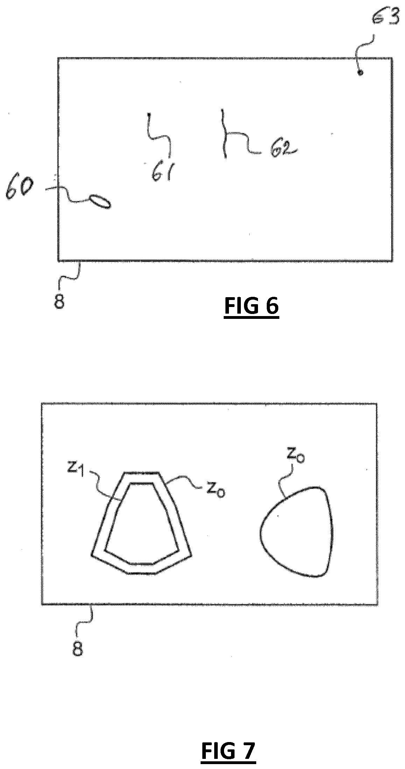

La figure 6 illustre un exemple de plateau de verre 8 pour divers défauts qui ont été catalogués. Par exemple, les défauts peuvent inclure différents types tels qu'un "pinhole" qui est un défaut sur le revêtement 61, un défaut de bulle 60, un défaut de rayure 62 sur le verre, un défaut de surface 63. Par exemple, un premier plan optimum de découpe pour un plateau de verre unique peut être généré de manière à obtenir des morceaux de verre de taille identique. Par exemple, le plateau de verre présente des défauts d'un seul type et d'une taille unique et qui ne sont pas acceptables dans les morceaux de verre à découper (ou "primitifs").

Dans un mode de réalisation, une fonction objectif de plusieurs grandeurs représentatives à optimiser est maximisée ou minimisée. C'est ce qui est décrit par exemple dans WO2012/164200, demande de brevet appartenant au déposant. En variante cependant, on utilisera un algorithme et un logiciel de tout type adapté pour générer le premier plan optimum de découpe en tenant compte de la taille des morceaux à découper et d'éventuelles contraintes de fabrication.

A titre d'exemple, dans un mode de réalisation, les formes des morceaux de verre à découper du plan de découpe aussi appelé «primitifs» dans l'industrie, peuvent être des rectangles, comme visible sur la figure 4. Cependant, comme on peut s'en rendre compte, les morceaux de verre à découper peuvent avoir n'importe quelle forme souhaitée, par exemple un polygone, un cercle, une ellipse, ou toute autre forme plus complexe, comme le montre la figure 7. Par exemple, alors que la forme générale des morceaux de verre à découper peut être polygonale, les morceaux peuvent être arrondis ou des bords incurvés, comme indiqué sur la figure 7.

Qui plus est, certaines zones des morceaux à découper peuvent avoir des critères d'acceptation des défauts différents, comme déjà expliqué plus haut. Un défaut qui n'est par exemple pas acceptable au centre du morceau à découper pourra par exemple l'être à sa périphérie. C'est pourquoi on définit par exemple différentes zones d'acceptation des défauts sur les morceaux de verre dans le but de réaliser la deuxième et éventuellement la première optimisation. Des exemples de zones sont illustrés sur la figure 7.

Le processus représenté sur la figure 1 peut être généralisé aux procédés de fabrication de tout type approprié. Le nombre d'étapes de l'analyse des défauts n'est pas limité aux étapes illustrées ici, mais inclut tout nombre de d'étapes adaptés aux contraintes de fabrication.

Dans un mode de réalisation, les identifiants 12 peuvent être fournis sur une tranche de plateau de verre 8. De cette manière, l'identifiant 12 sur chacun des plateaux de verre 8 peut être lu même si les plateaux de verre sont empilés ensemble.

Selon un mode de réalisation, au lieu d'identifier chaque plateau de verre 8 et d'avoir une base de données pour stocker les informations sur les défauts, les défauts peuvent être marqués à l'aide d'une encre d'une couleur prédéterminée, avec des caractères ou symboles prédéterminés sur le défaut lui-même ou en au voisinage du défaut. Le client pourra alors être en mesure d'identifier les différents types de défauts, la taille et la position des défauts et peut générer des informations sur les défauts qui sont utile pour le ou les programme(s) d'optimisation des plans de découpe.

Dans un mode de réalisation, les découpe des plateaux de verre par guillotine sont d'abord effectuées verticalement le long de la largeur du plateau de verre 8 pour toutes les lignes de découpe du premier niveau hiérarchique (rang X) et ensuite horizontalement le long de la largeur du travers découpé pour toutes les lignes de découpe du second niveau hiérarchique, et ainsi de suite pour les rangs supérieurs de découpe. Dans un autre mode de réalisation, les découpes de niveau hiérarchique le plus bas sont effectuées horizontalement le long de la longueur du plateau de verre 8 et ensuite verticalement et ainsi de suite.

Une méthode pour identifier des défauts dans le verre est fournie. Le procédé comprend l'identification, à l'aide d'un dispositif d'identification, chacun de la pluralité des plateaux de verre avec un identifiant, et générer, en utilisant un dispositif de cartographie, une carte d'attributs pour chaque verre de la pluralité de plateaux de verre. Le procédé comprend en outre l'association, à l'aide d'un système d'ordinateur, de la carte d'attributs de chacun de la pluralité de plateaux de verre avec l'identifiant correspondant de chacun de la pluralité de plateaux de verre; stocker la carte de caractéristiques de chaque verre des plateaux de verre dans une base de données, et la fourniture à un client avec un niveau d'accès à l'information dans la base de données de manière à permettre au client de récupérer au moins une partie de la carte d'attributs des plateaux de verre acquis par le client.

Dans certains modes de réalisation, les programmes d'application pour l'exécution des procédés peuvent être sous forme de programmes dans un ordinateur, tel qu'un ordinateur personnel ou un ordinateur serveur ou dans un environnement informatique distribué comprenant une pluralité d'ordinateurs. L'ordinateur peut comprendre, par exemple, un ordinateur de bureau, un ordinateur portable, un dispositif informatique de poche tel qu'un assistant numérique personnel, etc. Les produits de programme informatique peuvent comprendre un support lisible par ordinateur ou support de stockage ou un support ayant sur celui-ci des instructions stockées utilisées pour programmer un ordinateur pour effectuer les procédés décrits ci-dessus. Des exemples de support de stockage appropriés comprennent tout type de disque, y compris les disquettes, disques optiques, DVD, cédéroms, disques optiques magnétiques, des béliers, EPROM, EEPROM, cartes magnétiques ou optiques, disques dur, flash card (par exemple, un lecteur flash USB carte), carte mémoire PCMCIA, carte à puce, ou d'autres médias. Alternativement, une partie ou la totalité du produit programme d'ordinateur peut être téléchargé à partir d'un système informatique distant ou un serveur informatique via un réseau tel que l'Internet, un réseau ATM, un réseau étendu (WAN) ou un réseau local.

Les programmes sont stockés sur un ou plusieurs supports lisibles par ordinateur. Les programmes peuvent inclure des logiciels pour contrôler à la fois le matériel d'un ordinateur à usage général ou spécialisé ou un processeur. Le logiciel permet également à l'ordinateur ou le processeur d'interagir avec un utilisateur via les périphériques de sortie comme une interface utilisateur graphique, visiocasque (HMD), etc Le logiciel peut également inclure, mais sans s'y limiter, les pilotes de périphériques, systèmes d'exploitation et applications de l'utilisateur.

Bien que les différentes étapes du procédé décrit dans les paragraphes ci-dessus soient décrites comme se produisant dans un certain ordre, la présente demande n'est pas liée par l'ordre dans lequel les différentes étapes se produisent. En fait, dans des variantes de réalisation, les différentes étapes peuvent être exécutées dans un ordre différent de l'ordre décrit ci-dessus.

Bien que l'invention ait été décrite en détail à des fins d'illustration sur la base de ce qui est actuellement considéré comme les modes de réalisation les plus pratiques et plus pratique, il est bien entendu que ces détails sont uniquement à cette fin et que l'invention n'est pas limitée aux modes de réalisation décrits, mais, au contraire, est destinée à couvrir les modifications et arrangements équivalents qui sont dans l'esprit et la portée des revendications annexées. Par exemple, il est bien entendu que la présente invention envisage que, dans la mesure du possible, une ou plusieurs caractéristiques de tout mode de réalisation peut être combiné avec une ou plusieurs caractéristiques des autres modes de réalisation.

## Revendications

1. Procédé de découpe de plusieurs morceaux de verre dans au moins un plateau de verre (8), comprenant successivement :
- une étape de génération automatique par un calculateur possédant une mémoire sur laquelle des programmes sont aptes à calculer un premier plan optimum de découpe par guillotine à plusieurs niveaux hiérarchiques (X,Y,Z,V) de différents morceaux dans chacune dudit au moins un plateau de verre (8), les niveaux hiérarchiques étant définis en fonction d'informations concernant la taille des morceaux à découper ;
- une étape de lecture d'informations relatives à des défauts dans ledit au moins un plateau de verre (8),
dans lequel le procédé comprend en outre ultérieurement et successivement :
- une étape de génération automatique par un calculateur possédant une mémoire sur laquelle des programmes sont aptes à calculer un deuxième plan optimum de découpe par guillotine auxdits plusieurs niveaux hiérarchiques dudit au moins un plateau de verre (8), à partir dudit premier plan optimum de découpe et en fonction d'au moins certaines des informations relatives aux défauts incluant des permutations de travers de découpe de même niveau hiérarchique au sein dudit au moins un plateau de verre (8) ;
- une étape de découpe des morceaux de verre respectant ledit deuxième plan de découpe optimum généré.

2. Procédé selon la revendication 1, dans lequel les permutations des travers de découpe sont effectuées à surface de chute constante entre le premier plan optimum de découpe et le deuxième plan optimum de découpe.

3. Procédé selon la revendication 2, dans lequel ladite génération automatique est réalisée à nombre et taille des chutes constants.

4. Procédé selon l'une quelconque des revendications précédentes, dans lequel ledit premier plan optimum de découpe et ledit deuxième plan optimum de découpe sont ceux d'un seul plateau de verre (8).

5. Procédé selon l'une quelconque des revendications 1 à 3, dans lequel ledit premier plan optimum de découpe et ledit deuxième plan optimum de découpe sont les plans de découpe de plusieurs plateaux de verre (8).

6. Procédé selon la revendication 5, dans lequel l'étape de génération automatique du deuxième plan optimum de découpe inclut des permutations du premier plan optimum de découpe d'un plateau de verre parmi lesdits plusieurs plateaux de verre (8) avec le premier plan optimum de découpe d'un autre plateau de verre (8) parmi lesdits plusieurs plateaux de verre (8).

7. Procédé selon la revendication 6, dans lequel une valeur de complexité est attribuée à chacun des premiers plans optimums de découpe de chacun desdits plusieurs plateaux de verre (8), les permutations entre premiers plans de découpe étant effectuées prioritairement en fonction desdites valeurs de complexité.

8. Procédé selon la revendication 7, dans lequel lesdites valeurs de complexité sont attribuées en fonction d'au moins l'un parmi : le nombre de chutes, la surface des chutes, la répartition des chutes dans les différents niveaux hiérarchiques de la découpe par guillotine.

9. Procédé selon l'une quelconque des revendications précédentes, dans lequel les permutations des travers de découpe sont effectuées en respectant des contraintes.

10. Procédé selon la revendication 9, dans lequel les contraintes incluent des contraintes d'ordre de découpe desdits morceaux.

11. Procédé selon la revendication 9 ou 10, dans lequel les contraintes incluent des contraintes de position des chutes.

12. Procédé selon l'une quelconque des revendications précédentes, dans lequel le calculateur est programmé pour énumérer lesdites permutations des travers de découpe, le nouveau plan de découpe obtenu après une permutation étant retenu ou non par le calculateur en fonction de critères de performance du plan de découpe obtenu par rapport au plan de découpe précédent.

13. Procédé selon la revendication 12, dans lequel lesdites permutations des travers de découpe sont énumérées par le calculateur dans un ordre choisi en fonction de propriétés des travers de découpe.

14. Procédé selon la revendication 13, dans lequel lesdites propriétés des travers de découpe incluent au moins l'un parmi : le nombre de chutes, le nombre, de morceaux à découper, la surface des chutes.

15. Procédé selon l'une quelconque des revendications précédentes, dans lequel les défauts à éliminer sont priorisés par le calculateur.

16. Procédé selon la revendication 15, dans lequel les défauts sont priorisés en fonction de leur position.

17. Procédé selon la revendication 15 ou 16, dans lequel lesdites informations concernant les défauts incluent des valeurs de sévérité attribuées à au moins certains des défauts, la génération automatique du deuxième plan de découpe étant réalisée par le calculateur en fonction desdites valeurs de sévérité.

18. Procédé selon la revendication 17 prise ensemble avec la revendication 12, dans lequel lesdits critères de performance incluent l'élimination du défaut le plus sévère.

19. Procédé selon l'une quelconque des revendications précédentes, dans lequel lesdites permutations sont arrêtées après un temps de calcul prédéterminé même si d'autres permutations étaient programmées, le dernier plan de découpe obtenu par le calculateur devenant alors ledit deuxième plan de découpe.

20. Procédé selon la revendication 19, dans lequel ladite valeur prédéterminée de temps est inférieure à 1 minute sur une machine effectuant environ 10¹⁰ opérations (en virgule flottante) par seconde (Gflops).

21. Procédé selon l'une quelconque des revendications précédentes, dans lequel certains des morceaux à découper ont des dimensions différentes.

22. Procédé selon l'une quelconque des revendications précédentes, comprenant, préalablement à la génération automatique dudit premier plan optimum de découpe :
- une étape d'analyse des défauts dans ledit au moins un plateau de verre (8) ;
- une étape de mémorisation d'informations relatives aux défauts détectés dans ledit au moins un plateau de verre (8),
l'étape de lecture réalisée après génération automatique du premier plan optimum de découpe comprenant une étape d'identification dudit au moins un plateau de verre (8) et une étape d'accès aux informations mémorisées lors de ladite étape d'analyse des défauts.

## Patentansprüche

1. Verfahren zum Schneiden mehrerer Glasabschnitte aus mindestens einer Glastafel (8), umfassend nacheinander:
- einen Schritt des automatischen Erzeugens durch einen Rechner, der einen Speicher besitzt, in dem Programme geeignet sind, einen ersten optimalen Guillotine-Schnittplan mit mehreren Hierarchieebenen (X, Y, Z, V) zum Schneiden unterschiedlicher Abschnitte aus jeder der mindestens einen Glastafel (8) zu berechnen, wobei die Hierarchieebenen in Abhängigkeit von Informationen über die Größe der zu schneidenden Abschnitte definiert werden;
- einen Schritt des Lesens von Informationen über Mängel in der mindestens einen Glastafel (8), wobei das Verfahren ferner anschließend und nacheinander umfasst:
- einen Schritt des automatischen Erzeugens durch einen Rechner, der einen Speicher besitzt, in dem Programme geeignet sind, einen zweiten optimalen Guillotine-Schnittplan mit mehreren Hierarchieebenen zum Schneiden der mindestens einen Glastafel (8) ausgehend von dem ersten optimalen Schnittplan und in Abhängigkeit von mindestens einigen der Informationen über die Mängel zu berechnen, der Vertauschungen von Traversen der gleichen Hierarchieebene innerhalb der mindestens einen Glastafel (8) aufweist;
- einen Schritt des Schneidens der Glasabschnitte unter Einhaltung des zweiten erzeugten optimalen Schnittplans.

2. Verfahren nach Anspruch 1, wobei die Vertauschungen der Traversen bei gleich bleibender Verschnittfläche zwischen dem ersten optimalen Schnittplan und dem zweiten optimalen Schnittplan durchgeführt werden.

3. Verfahren nach Anspruch 2, wobei die automatische Erzeugung bei gleich bleibender Anzahl und Größe der Verschnitte ausgeführt wird.

4. Verfahren nach einem der vorstehenden Ansprüche, wobei der erste optimale Schnittplan und der zweite optimale Schnittplan diejenigen einer einzigen Glastafel (8) sind.

5. Verfahren nach einem der Ansprüche 1 bis 3, wobei der erste optimale Schnittplan und der zweite optimale Schnittplan die Schnittpläne mehrerer Glastafeln (8) sind.

6. Verfahren nach Anspruch 5, wobei der Schritt des automatischen Erzeugens des zweiten optimalen Schnittplans Vertauschungen des ersten optimalen Schnittplans einer Glastafel der mehreren Glastafeln (8) gegen den ersten optimalen Schnittplan einer anderen Glastafel (8) der mehreren Glastafeln (8) aufweist.

7. Verfahren nach Anspruch 6, wobei jedem der ersten optimalen Schnittpläne jeder der mehreren Glastafeln (8) ein Komplexitätswert zugewiesen wird, wobei die Vertauschungen zwischen ersten Schnittplänen vorrangig in Abhängigkeit von den Komplexitätswerten durchgeführt werden.

8. Verfahren nach Anspruch 7, wobei die Komplexitätswerte in Abhängigkeit von mindestens einem der folgenden Faktoren zugewiesen werden: Anzahl von Verschnitten, Fläche der Verschnitte, Verteilung der Verschnitte in den unterschiedlichen Hierarchieebenen des Guillotineschnitts.

9. Verfahren nach einem der vorstehenden Ansprüche, wobei die Vertauschungen der Traversen unter Einhaltung der Auflagen durchgeführt werden.

10. Verfahren nach Anspruch 9, wobei die Auflagen Auflagen der Schnittreihenfolge der Abschnitte aufweisen.

11. Verfahren nach Anspruch 9 oder 10, wobei die Auflagen Auflagen der Position der Verschnitte aufweisen.

12. Verfahren nach einem der vorstehenden Ansprüche, wobei der Rechner dazu programmiert ist, die Vertauschungen der Traversen aufzulisten, wobei der nach einer Vertauschung erhaltene neue Schnittplan von dem Rechner in Abhängigkeit von Leistungskriterien des erhaltenen Schnittplans gegenüber dem vorhergehenden Schnittplan berücksichtigt wird oder nicht.

13. Verfahren nach Anspruch 12, wobei die Vertauschungen der Traversen von dem Rechner in einer Reihenfolge aufgelistet werden, die in Abhängigkeit von Eigenschaften der Traversen ausgewählt werden.

14. Verfahren nach Anspruch 13, wobei die Eigenschaften der Traversen mindestens eine der folgenden aufweisen: Anzahl der Verschnitte, Anzahl der zu schneidenden Abschnitte, Fläche der Verschnitte.

15. Verfahren nach einem der vorstehenden Ansprüche, wobei die zu eliminierenden Mängel von dem Rechner priorisiert werden.

16. Verfahren nach Anspruch 15, wobei die Mängel in Abhängigkeit von ihrer Position priorisiert werden.

17. Verfahren nach Anspruch 15 oder 16, wobei die Informationen über die Mängel Schweregradwerte aufweisen, die mindestens einigen der Mängel zugewiesen sind, wobei die automatische Erzeugung des zweiten Schnittplans von dem Rechner in Abhängigkeit von den Schweregradwerten ausgeführt wird.

18. Verfahren nach Anspruch 17 in Verbindung mit Anspruch 12, wobei die Leistungskriterien die Eliminierung des schwerwiegendsten Mangels aufweisen.

19. Verfahren nach einem der vorstehenden Ansprüche, wobei die Vertauschungen nach einer vorbestimmten Rechenzeit gestoppt werden, selbst wenn weitere Vertauschungen programmiert wurden, wobei der letzte von dem Rechner erhaltene Schnittplan dann der zweite Schnittplan wird.

20. Verfahren nach Anspruch 19, wobei der vorbestimmte Zeitwert weniger als 1 Minute auf einer Maschine beträgt, die etwa 10¹⁰ Operationen (Gleitkommaoperationen) pro Sekunde (GigaFLOPS) durchführt.

21. Verfahren nach einem der vorstehenden Ansprüche, wobei einige der zu schneidenden Abschnitte unterschiedliche Abmessungen haben.

22. Verfahren nach einem der vorstehenden Ansprüche, das vor der automatischen Erzeugung des ersten optimalen Schnittplans Folgendes umfasst:
- einen Schritt des Analysierens der Mängel in der mindestens einen Glastafel (8);
- einen Schritt des Speicherns von Informationen über die in der mindestens einen Glastafel (8) festgestellten Mängel,
wobei der nach der automatischen Erzeugung des ersten optimalen Schnittplans ausgeführte Leseschritt einen Schritt des Identifizierens der mindestens einen Glastafel (8) und einen Schritt des Zugreifens auf die beim Schritt des Analysierens der Mängel gespeicherten Informationen umfasst.

## Claims

1. A method for cutting out a plurality of pieces of glass from at least one glass sheet (8), comprising, in sequence:
- a step of automatic generation by a computer with a storage unit, containing programs adapted to calculate a first optimum plan for guillotine cutting at a number of hierarchical levels (X, Y, Z, V) of different pieces from each of said at least one glass sheet (8), the said number of hierarchical levels being defined as a function of information relating to the size of the pieces to be cut out;
- a step of reading information relating to defects in said at least one glass sheet (8),
wherein the method comprises, additionally and subsequently:
- a step of automatic generation by a computer with a storage unit, containing programs adapted to calculate a second optimum plan for guillotine cutting at said number of hierarchical levels from said at least one glass sheet (8), on the basis of said first optimum cutting plan and as a function of at least some of the information relating to the defects, including permutations of cross cut sections at the same hierarchical level within said at least one glass sheet (8);
- a step of cutting pieces of glass in accordance with said second optimum cutting plan generated.

2. The method as claimed in claim 1, wherein the permutations of the cross cut sections are carried out with a constant offcut surface area between the first optimum cutting plan and the second optimum cutting plan.

3. The method as claimed in claim 2, wherein said automatic generation is carried out with a constant number and size of offcuts.

4. The method as claimed in any one of the preceding claims, wherein said first optimum cutting plan and said second optimum cutting plan are those for a single glass sheet (8).

5. The method as claimed in any of claims 1 to 3, wherein said first optimum cutting plan and said second optimum cutting plan are the cutting plans for a plurality of glass sheets (8).

6. The method as claimed in claim 5, wherein the step of automatic generation of the second cutting plan includes permutations of the first optimum cutting plan of a glass sheet from among said plurality of glass sheets (8) with the first optimum cutting plan of another glass sheet (8) from among said plurality of glass sheets (8).

7. The method as claimed in claim 6, wherein a complexity value is assigned to each of the first optimum cutting plans of each of said plurality of glass sheets (8), the permutations between first cutting plans being performed, as a priority, as a function of said complexity values.

8. The method as claimed in claim 7, wherein said complexity values are assigned as a function of at least one of the number of offcuts, the surface area of the offcuts, and the distribution of the offcuts in the different hierarchical levels of the guillotine cutting.

9. The method as claimed in any one of the preceding claims, wherein the permutations of the cross cut sections are carried out in conformity with the constraints.

10. The method as claimed in claim 9, wherein the constraints include constraints as to the order of cutting of said pieces.

11. The method as claimed in claim 9 or 10, wherein the constraints include constraints as to the position of the offcuts.

12. The method as claimed in any one of the preceding claims, wherein the computer is programmed to list said permutations of the cross cut sections, the new cutting plan produced after a permutation being accepted or rejected by the computer as a function of performance criteria of the resulting cutting plan with respect to the preceding cutting plan.

13. The method as claimed in claim 12, wherein said permutations of the cross cut sections are listed by the computer in an order chosen as a function of properties of the cross cut sections.

14. The method as claimed in claim 13, wherein said properties of the cross cut sections include at least one of the number of offcuts, the number of pieces to be cut out, and the surface area of the offcuts.

15. The method as claimed in any one of the preceding claims, wherein the defects to be eliminated are prioritized by the computer.

16. The method as claimed in claim 15, wherein the defects are prioritized as a function of their position.

17. The method as claimed in claim 15 or 16, wherein said information concerning the defects include severity values assigned to at least some of the defects, the automatic generation of the second cutting plan being performed by the computer as a function of said severity values.

18. The method as claimed in claim 17 considered in combination with claim 12, wherein said performance criteria include the elimination of the most severe defect.

19. The method as claimed in any one of the preceding claims, wherein said permutations are stopped after a predetermined computing time, even if other permutations were programmed, the final cutting plan produced by the computer then becoming said second cutting plan.

20. The method as claimed in claim 19, wherein said predetermined time interval is less than one minute for a machine performing about 10¹⁰ (floating point) operations per second (Gflops).

21. The method as claimed in any one of the preceding claims, wherein some of the pieces to be cut out have different dimensions.

22. The method as claimed in any one of the preceding claims, comprising, before the automatic generation of said first optimum cutting plan:
- a step of analyzing defects in said at least one glass sheet (8);
- a step of storing information relating to the defects detected in said at least one glass sheet (8),
the reading step performed after the automatic generation of the first optimum cutting plan comprising a step of identifying said at least one glass sheet (8) and a step of accessing the information stored in said step of defect analysis.
